(19) Europäisches Patentamt
European Patent Office
Office européen des brevets

(11) EP 0 912 088 B1

(12) EUROPÄISCHE PATENTSCHRIFT

(45) Veröffentlichungstag und Bekanntmachung des Hinweises auf die Patenterteilung:
**11.09.2002 Patentblatt 2002/37**

(21) Anmeldenummer: **97930429.2**

(22) Anmeldetag: **27.06.1997**

(51) Int Cl.[7]: **A01N 37/50**, A01N 47/24, A01N 47/44
// (A01N47/44, 47:24, 37:50)

(86) Internationale Anmeldenummer:
**PCT/EP97/03378**

(87) Internationale Veröffentlichungsnummer:
**WO 98/001033 (15.01.1998 Gazette 1998/02)**

# (54) FUNGIZIDE MISCHUNGEN

FUNGICIDAL MIXTURES

MELANGES FUNGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **10.07.1996 DE 19627696**
**30.08.1996 DE 19635081**

(43) Veröffentlichungstag der Anmeldung:
**06.05.1999 Patentblatt 1999/18**

(73) Patentinhaber: **BASF AKTIENGESELLSCHAFT**
**67056 Ludwigshafen (DE)**

(72) Erfinder:
- **MÜLLER, Bernd**
**D-67227 Frankenthal (DE)**
- **SAUTER, Hubert**
**D-68167 Mannheim (DE)**
- **AMMERMANN, Eberhard**
**D-64646 Heppenheim (DE)**
- **LORENZ, Gisela**
**D-67434 Hambach (DE)**
- **STRATHMANN, Siegfried**
**D-67117 Limburgerhof (DE)**
- **SCHELBERGER, Klaus**
**D-67161 Gönnheim (DE)**
- **SCHERER, Maria**
**D-76829 Landau (DE)**
- **HAMPEL, Manfred**
**D-67435 Neustadt (DE)**
- **SAUR, Reinhold**
**D-67459 Böhl-Iggelheim (DE)**
- **LEYENDECKER, Joachim**
**D-68526 Ladenburg (DE)**

(56) Entgegenhaltungen:
**EP-A- 0 255 987** **EP-A- 0 741 970**
**WO-A-96/01258**

- **DATABASE WPI Section Ch, Week 8938 Derwent Publications Ltd., London, GB; Class C02, AN 89-273349 XP002042766 & JP 01 197 415 A (HOKKO CHEM IND CO LTD) , 9.August 1989**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 912 088 B1

## Beschreibung

Die vorliegende Erfindung betrifft eine synergistische fungizide Mischung, welche als aktive Bestandteile

$a_1$) den Oximethercarbonsäureester der Formel Ia

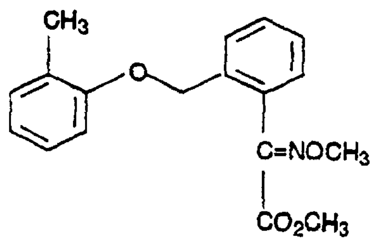

(Ia)

eines seiner Salze oder Addukte, und/oder

$a_2$) ein Carbamat der Formel Ib,

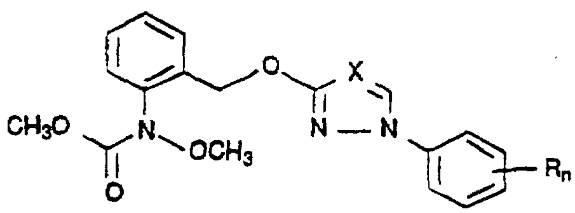

(Ib)

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, eines seiner Salze oder Addukte, sowie

b) Iminoctadine II

$$H_2N\text{-}C(=NH)\text{-}NH\text{-}(CH_2)_8\text{-}NH\text{-}(CH_2)_8\text{-}NH\text{-}C(=NH)\text{-}NH_2 \qquad \text{(II)}$$

eines seiner Salze oder Addukte, in einer synergistisch wirksamen Menge enthält.

Außerdem betrifft die Erfindung Verfahren zur Bekämpfung von Schadpilzen mit Mischungen der Verbindungen I und II und die Verwendung der Verbindung I und der Verbindung II zur Herstellung derartiger Mischungen.

Die Verbindung der Formel Ia, ihre Herstellung und ihre Wirkung gegen Schadpilze ist bekannt aus EP-A 253 213. Die WO-A 96/01,256 und WO-A 96/01,258 beschreiben Verbindungen der Formel Ib, deren Herstellung und deren Verwendung. Ebenfalls bekannt ist die Verbindung II (common name: Iminoctadine), deren Herstellung und deren Wirkung gegen Schadpilze (vgl. "Pesticide Manual", Seite 593).

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindung I und der Verbindung II oder bei Anwendung der Verbindungen Ia und/oder Ib und der Verbindungen II nacheinander Schadpilze besser bekämpfen lassen, als mit den Einzelverbindungen allein.

Die Formel Ib repräsentiert insbesondere Carbamate, in denen die Kombination der Substituenten einer Zeile der folgenden Tabelle entspricht:

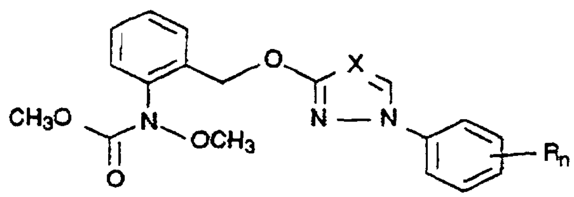

(Ib)

| Nr. | X | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | $2-CH_3$ |
| I.11 | N | $3-CH_3$ |
| I.12 | N | $4-CH_3$ |
| I.13 | N | $2-CH_2CH_3$ |
| I.14 | N | $3-CH_2CH_3$ |
| I.15 | N | $4-CH_2CH_3$ |
| I.16 | N | $2-CH(CH_3)_2$ |
| I.17 | N | $3-CH(CH_3)_2$ |
| I.18 | N | $4-CH(CH_3)_2$ |
| I.19 | N | $2-CF_3$ |
| I.20 | N | $3-CF_3$ |
| I.21 | N | $4-CF_3$ |
| I.22 | N | $2,4-F_2$ |
| I.23 | N | $2,4-Cl_2$ |
| I.24 | N | $3,4-Cl_2$ |
| I.25 | N | $2-Cl, 4-CH_3$ |
| I.26 | N | $3-Cl, 4-CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |

(fortgesetzt)

| Nr. | X | $R_n$ |
|---|---|---|
| I.33 | CH | 2-Br |
| I.34 | CH | 3-Br |
| I.35 | CH | 4-Br |
| I.36 | CH | $2\text{-}CH_3$ |
| I.37 | CH | $3\text{-}CH_3$ |
| I.38 | CH | $4\text{-}CH_3$ |
| I.39 | CH | $2\text{-}CH_2CH_3$ |
| I.40 | CH | $3\text{-}CH_2CH_3$ |
| I.41 | CH | $4\text{-}CH_2CH_3$ |
| I.42 | CH | $2\text{-}CH(CH_3)_2$ |
| I.43 | CH | $3\text{-}CH(CH_3)_2$ |
| I.44 | CH | $4\text{-}CH(CH_3)_2$ |
| I.45 | CH | $2\text{-}CF_3$ |
| I.46 | CH | $3\text{-}CF_3$ |
| I.47 | CH | $4\text{-}CF_3$ |
| I.48 | CH | $2,4\text{-}F_2$ |
| I.49 | CH | $2.4\text{-}Cl_2$ |
| I.50 | CH | $3,4\text{-}Cl_2$ |
| I.51 | CH | $2\text{-}Cl, 4\text{-}CH_3$ |
| I.52 | CH | $3\text{-}Cl, 4\text{-}CH_3$ |

Besonders bevorzugt werden die Verbindungen I.12, I.23, I.32 und I.38.

Die Verbindungen Ia und Ib sind wegen des basischen Charakters der Oximether-Einheit in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, ferner Kohlensäure, Schwefelsäure, Phosphorsäure und Salpetersäure.

Als organischen Säuren kommen beispielsweise in Betracht: Ameisensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl, welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl, welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Naterialschutz (z.B. Holzschutz) anwendbar, beispielsweise gegen Paecilomyces variocii.

Die Verbindungen I und II können gleichzeitig, und zwar gemeinsam oder getrennt, oder nacheinander aufgebracht werden, wobei die Reihenfolge bei getrennter Applikation im allgemeinen keine Aus-Wirkung auf den Bekämpfungserfolg hat.

Die Verbindungen I und II werden üblicherweise in einem Gewichtsverhältnis von 10:1 bis 0,05:2, vorzugsweise 5:1 bis 0,05:1, insbesondere 1:1 bis 0,05:1 angewendet. Dabei bezieht sich die Menge an Verbindungen I auf Ia oder Ib oder ggf. auf eine Mischung aus Verbindungen Ia und Ib.

Die Aufwandmengen der erfindungsgemäßen Mischungen liegen, vor allem bei landwirtschaftlichen Kulturflächen, je nach Art des gewünschten Effekts bei 0,01 bis 7 kg/ha, vorzugsweise 0,1 bis 5 kg/ha, insbesondere 0,1 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,05 bis 2 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Occyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Wirksamkeit gegen Botrytis cinerea

Die Wirkstoffe wurden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Paprikasämlinge der Sorte "Neusiedler Ideal Elite" wurden, nachdem sich 4 - 5 Blätter gut entwickelt hatten, mit wäßrigen Suspensionen, die 80 Gew.-% Wirkstoff und 20 Gew.-% Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 - 24 °C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedeckten.

Die Auswertung erfolgte durch Feststellung der befallenen Blattflächen in Prozent. Diese Prozent-Werte wurden in Wirkungsgrade umgerechnet. Der Wirkungsgrad (**W**) wurde nach der Formel von Abbot wie folgt bestimmt:

$$W = (\beta - \alpha)\cdot 100/\beta$$

- $\alpha$ entspricht dem Pilzbefall der behandelten Pflanzen in % und
- $\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

- E zu erwartender Wirkungsgrad, ausgedrückt in % der unbehandelten Kontrolle, beim Einsatz der Mischung aus den Wirkstoffen A und B in den Konzentrationen a und b
- x der Wirkungsgrad, ausgedrückt in % der unbehandelten Kontrolle, beim Einsatz des Wirkstoffs A in der Konzentration a
- y der Wirkungsgrad, ausgedrückt in % der unbehandelten Kontrolle, beim Einsatz des Wirkstoffs B in der Konzentration b Wirksamkeit gegen Botrytis cinerea (Grauschimmel)

Paprikasämlinge (Sorte: "Neusiedler Ideal Elite") mit 4-5 Blättern wurden mit der Wirkstoffaufbereitung tropfnaß gespritzt. Nach dem Abtrocknen wurden die Pflanzen mit einer Konidienaufschwemmung des Pilzes *Botrytis cinerea* besprüht und 5 Tage bei 22-24°C bei hoher Luftfeuchtigkeit bewahrt. Die Auswertung erfolgte visuell.

## Patentansprüche

1. Fungizide Mischung, enthaltend als aktive Bestandteile

$a_1$) den Oximethercarbonsäureester der Formel Ia

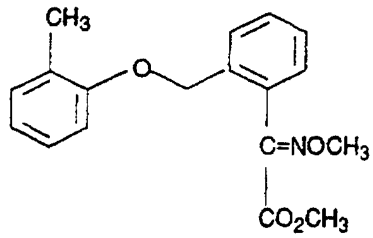

(Ia)

eines seiner Salze oder Addukte, und/oder

$a_2$) ein Carbamat der Formel Ib,

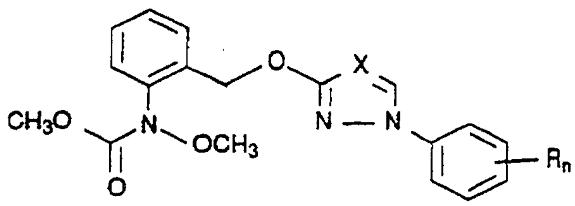

(Ib)

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, eines seiner Salze oder Addukte, sowie

b) Iminoctadine II

$$H_2N\text{-}C(=NH)\text{-}NH\text{-}(CH_2)_8\text{-}NH\text{-}(CH_2)_8\text{-}NH\text{-}C(=NH)\text{-}NH_2 \qquad \text{(II)}$$

oder eines seiner Salze oder Addukte,

in einer synergistisch wirksamen Menge.

2. Fungizide Mischung nach Anspruch 1, **dadurch gekennzeichnet, daß** das Gewichtsverhältnis der Verbindung I, ihres Salzes oder Adduktes, zu der Verbindung II, ihres Salzes oder Adduktes, 10:1 bis 0,05:2 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der Verbindung der Formel I, einem ihrer Salze oder Addukte gemäß Anspruch 1 und der Verbindung der Formel II, einem ihrer Salze oder Addukte gemäß Anspruch 1 behandelt.

4. Verfahren nach Anspruch 3, **dadurch gekennzeichnet, daß** man die Verbindung I, eines ihrer Salze oder Addukte gemäß Anspruch 1 und die Verbindung II, einem ihrer Salze oder Addukte gemäß Anspruch 1 gleichzeitig, und zwar gemeinsam oder getrennt, oder nacheinander ausbringt.

5. Verfahren nach Anspruch 3 oder 4, **dadurch gekennzeichnet, daß** man die Verbindung I, eines ihrer Salze oder Addukte gemäß Anspruch 1 in einer Menge von 0,01 bis 2,5 kg/ha aufwendet.

6. Verfahren nach den Ansprüchen 3 bis 5, **dadurch gekennzeichnet, daß** man die Verbindung II, eines ihrer Salze oder Addukte gemäß Anspruch 1 in einer Menge von 0,01 bis 5 kg/ha aufwendet.

7. Verwendung der Verbindung I, eines ihrer Salze oder Addukte gemäß Anspruch 1 zur Herstellung einer fungizid

wirksamen synergistischen Mischung gemäß Anspruch 1.

**8.** Verwendung der Verbindung II, eines ihrer Salze oder Addukte gemäß Anspruch 1 zur Herstellung einer fungizid wirksamen synergistischen Mischung gemäß Anspruch 1.

**9.** Mittel nach Anspruch 1, das in zwei Teilen konditioniert ist, wobei der eine Teil Verbindungen der Formel I gemäß Anspruch 1 in einem festen oder flüssigen Träger enthält und der andere Teil Verbindungen der Formel II gemäß Anspruch 1 in einem festen oder flüssigen Träger enthält.

## Claims

**1.** A fungicidal mixture comprising, as active components,

$a_1$) the oxime ether carboxylate of the formula Ia

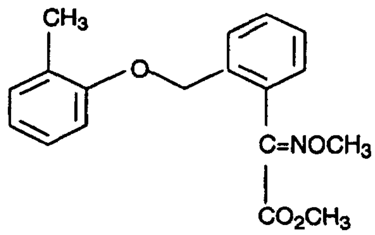

(Ia)

or a salt or adduct thereof, and/or

$a_2$) a carbamate of the formula Ib

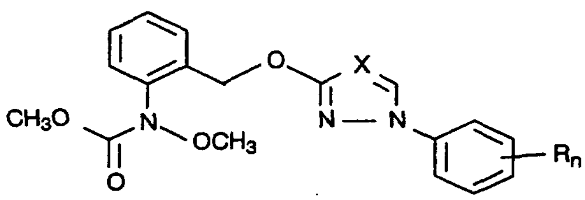

(Ib)

where X is CH or N, n is 0, 1 or 2 and R is halogen, $C_1$-$C_4$-alkyl or $C_1$-$C_4$-haloalkyl, it being possible for the radicals R to be different if n is 2, or a salt or adduct thereof, and

b) iminoctadine II

$$H_2N\text{-}C(=NH)\text{-}NH\text{-}(CH_2)_8\text{-}NH\text{-}(CH_2)_8\text{-}NH\text{-}C(=NH)\text{-}NH_2 \quad \text{(II)}$$

or a salt or adduct thereof,

in a synergistically active amount.

**2.** A fungicidal mixture as claimed in claim 1 wherein the weight ratio of the compound I or of a salt or adduct thereof to the compound II or of a salt or adduct thereof is 10:1 to 0.05:2.

**3.** A method of controlling harmful fungi, which comprises treating the harmful fungi, their environment, or the plants, seeds, soils, areas, materials or spaces to be kept free from them with the compound of the formula I or a salt or adduct thereof as set forth in claim 1 and the compound of the formula II or a salt or adduct thereof as set forth in claim 1.

**4.** A method as claimed in claim 3, wherein the compound I or a salt or adduct thereof as set forth in claim 1 and the compound II or a salt or adduct thereof as set forth in claim 1 are applied simultaneously, ie. together or separately, or in succession.

**5.** A method as claimed in claim 3 or 4, wherein the compound I or a salt or adduct thereof as set forth in claim 1 is applied at a rate of 0.01 to 2.5 kg/ha.

**6.** A method as claimed in any of claims 3 to 5, wherein the compound II or a salt or adduct thereof as set forth in claim 1 is applied at a rate of 0.01 to 5 kg/ha.

**7.** The use of the compound I or of a salt or adduct thereof as set forth in claim 1 for the preparation of a fungicidally active synergistic mixture as claimed in claim 1.

**8.** The use of the compound II or of a salt or adduct thereof as set forth in claim 1 for the preparation of a fungicidally active synergistic mixture as claimed in claim 1.

**9.** A composition as claimed in claim 1 which is conditioned in two parts, one part comprising compounds of the formula I as set forth in claim 1 in a solid or liquid carrier and the other part comprising the compound of the formula II as set forth in claim 1 in a solid or liquid carrier.

**Revendications**

**1.** Mélange fongicide contenant en tant que constituants actifs

$a_1$) l'ester d'acide oximéthercarboxylique de formule Ia

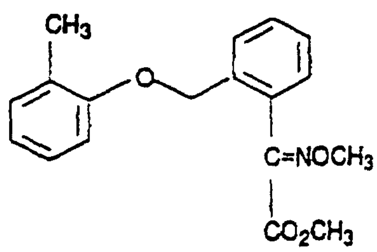

(Ia)

l'un de ses sels ou adducts, et/ou
$a_2$) un carbamate de formule Ib

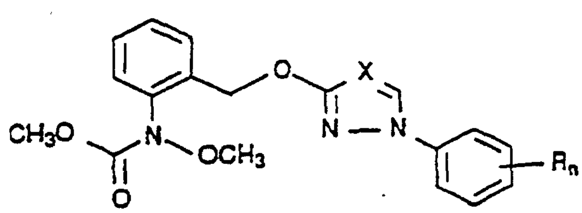

(Ib)

dans laquelle X représente CH ou N, n est égal à 0, 1 ou 2 et R représente un halogène, un groupe alkyle en C1-C4 ou halogénoalkyle en C1-C4, les substituants R pouvant être différents lorsque n est égal à 2, l'un de ses sels ou adducts, et
b) l'iminoctadine II

$$H_2N\text{-}C(=NH)\text{-}NH\text{-}(CH_2)_8\text{-}NH\text{-}(CH_2)_8\text{-}NH\text{-}C(=NH)\text{-}NH_2 \quad (II)$$

ou l'un de ses sels ou adducts,
en quantité synergétique efficace.

2. Mélange fongicide selon la revendication 1, **caractérisé par le fait que** les proportions relatives entre le composé I, ses sels ou adducts, et le composé II, ses sels ou adducts, vont de 10 : 1 à 0,05 : 2.

3. Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes par le composé de formule I, l'un de ses sels ou adducts selon la revendication 1 et le composé de formule II, l'un de ses sels ou adducts selon la revendication 1.

4. Procédé selon la revendication 3, **caractérisé par le fait que** l'on applique le composé I, l'un de ses sels ou adducts selon la revendication 1 et le composé II, l'un de ses sels ou adducts selon la revendication 1 en même temps, ensemble ou séparément, ou successivement.

5. Procédé selon l'une des revendications 3 ou 4, **caractérisé par le fait que** l'on utilise le composé I, l'un de ses sels ou adducts selon la revendication 1 en quantité de 0,01 à 2,5 kg/ha.

6. Procédé selon les revendications 3 à 5, **caractérisé par le fait que** l'on utilise le composé II, l'un de ses sels ou adducts selon la revendication 1, en quantité de 0,01 à 5 kg/ha.

7. Utilisation du composé I, de l'un de ses sels ou adducts selon la revendication 1, pour la préparation d'un mélange fongicide à activité synergétique selon la revendication 1.

8. Utilisation du composé II, de l'un de sels sels ou adducts selon la revendication 1, pour la préparation d'un mélange fongicide à activité synergétique selon la revendication 1.

9. Produit selon la revendication 1, conditionné en deux parties, l'une des parties contenant des composés de formule I selon la revendication 1 dans un véhicule solide ou liquide et l'autre partie des composés de formule II selon la revendication 1 dans un véhicule solide ou liquide.